# EUROPÄISCHE PATENTSCHRIFT

(11) **EP 4 026 275 B1**
(45) Veröffentlichungstag und Bekanntmachung des Hinweises auf die Patenterteilung: **04.06.2025**
(21) Anmeldenummer: 20758116.6
(22) Anmeldetag: 06.08.2020
(51) Int. Cl.: H04L 12/40, H04L 12/403, H04L 12/44, H05K 1/00

(54) **ETHERCAT-BUSSYSTEM, AUFWEISEND EINEN ETHERCAT-BUSMASTER UND ETHERCAT-BUSTEILNEHMER**
ETHERCAT BUS SYSTEM COMPRISING AN ETHERCAT BUS MASTER AND ETHERCAT BUS STATION
SYSTÈME DE BUS ÉTHERCAT COMPRENANT UN MAÎTRE DU BUS ÉTHERCAT ET DES ABONNÉS DU BUS ÉTHERCAT

(30) Priorität: 06.09.2019 DE 102019006303
(43) Veröffentlichungstag der Anmeldung: 13.07.2022
(73) Patentinhaber: SEW-EURODRIVE GmbH & Co. KG, 76646 Bruchsal (DE)
(72) Erfinder: SCHÄFER, Michael, 76689 Karlsdorf-Neuthard (DE); BRUNNER, Daniel, 76689 Karlsdorf-Neuthard (DE)
(86) Internationale Anmeldenummer: PCT/EP2020/025361
(87) Internationale Veröffentlichungsnummer: WO 2021/043435

(56) Entgegenhaltungen:
- EP-A1- 2 688 002
- EP-A1- 2 688 250
- WO-A2-2012/087901

## Beschreibung

Die Erfindung betrifft ein ETHERCAT-Bussystem, aufweisend einen ETHERCAT-Busmaster und ETHERCAT-Busteilnehmer.

Aus der DE 10 2017 214 893 A1 ist ein Verfahren zum Betreiben eines ETHERCAT-Feldbussystems bekannt, das als Busmaster einen Computer aufweist.

Aus der US 2014 / 0 047 056 A1 ist ein Bussystem bekannt. Somit muss bei der Herstellung im Lager zu jedem Verteiler ein geeigneter Busmaster bevorratet werden und dann ausgewählt und zusammengebaut werden.

**Aus der** EP 2 688 250 A1 **ist als nächstliegender Stand der Technik ein Netzwerksystem bekannt.**

**Aus der** WO 2012 /087901 A2 **ist eine Kommunikationsarchitektur für Datenkommunikation bekannt.**

**Aus der** EP 2 688 002 A1 **Assistenzsystem für Netzwerkdesign bekannt.**

Der Erfindung liegt daher die Aufgabe zugrunde, sternförmig verbundene Stränge bei ETHERCAT flexibel ausbildbar zu ermöglichen.

Erfindungsgemäß wird die Aufgabe bei dem Bussystem nach den in Anspruch 1 angegebenen Merkmalen gelöst.

Wichtige Merkmale der Erfindung bei dem ETHERCAT-Bussystem sind, dass er einen ETHERCAT-Busmaster und ETHERCAT-Busteilnehmer aufweist,
wobei ein ETHERCAT-Sternverteiler zusammen mit dem ETHERCAT-Busmaster auf derselben Leiterplatte angeordnet und/oder bestückt sind.

Von Vorteil ist dabei, dass die Sterntopologie direkt auf der Leiterplatte und somit auch in Echtzeit ausführbar ist. Außerdem ist die Anordnung störungssicher. Darüber hinaus ist die Spannung auffrischbar. Durch die integrierte Ausführung auf einer einzigen Leiterplatte ist eine Echtzeit-fähige Realisierung des ETHERCAT-Busses ermöglicht.

Die Flexibilität ist durch die Ausführung auf einer einzigen Leiterplatte gewährleistet, da die Bestückung der Leiterplatte flexibel ausführbar ist. Je nach Bedarf wird eine andere Bestückung ausgeführt. Somit ist eine jeweils gewünschte Variante an Sternverteiler und Busmaster bestückbar. Somit ist kein erhöhter Lagerbedarf notwendig.

Bei einer vorteilhaften Ausgestaltung ist am Anschluss, insbesondere Ausgang, des Busmasters, ein Pegelwandler angeordnet, von dem Datenleitungen über zumindest eine kapazitive Trennung, insbesondere Kondensatoranordnung, zu einem weiteren Pegelwandler führen, welcher am Anschluss des Sternverteilers angeordnet und/oder angeschlossen ist. Von Vorteil ist dabei, dass trotz der Anordnung auf derselben Leiterplatte und somit geringem Abstand zwischen Busmaster und Sternverteiler eine Pegelwandlung und Pegelrückwandlung mit zwischengeordneter galvanischer Trennung ausgeführt ist.

Bei einer vorteilhaften Ausgestaltung weist der Sternverteiler Ausgänge auf, wobei an jedem Ausgang ein jeweiliger weiterer Pegelwandler angeordnet und/oder angeschlossen ist, der jeweils über eine galvanische Trennung mit einem jeweiligen Steckverbinderteil verbunden ist, dass auf der Leiterplatte bestückt ist,
wobei am jeweiligen Steckverbinderteil jeweils ein Strang von mittels des ETHERCAT-Datenbusses in Reihe verbundenen Busteilnehmern anschließbar, insbesondere angeschlossen, ist. Von Vorteil ist dabei, dass wiederum Pegelwandler vorgesehen sind, so dass der Sternverteiler selbst in TTL-Logik ausführbar ist. Auf diese Weise ist eine Spannungsauffrischung in einfacher Weise im Sternverteiler ermöglicht.

**Erfindungsgemäß** ist die Leiterplatte von einem Gehäuse umgeben,
wobei ein Kühlkörper die Verlustwärme des Busmasters und des Sternverteilers an die Umgebung abführt. Von Vorteil ist dabei, dass ein gemeinsames Gehäuse für die Leiterplatte mit Busmaster und Sternverteiler notwendig ist.

Bei einer vorteilhaften Ausgestaltung ist der Busmaster mit einer Ethernet-Schnittstelle verbunden, die ebenfalls auf der Leiterplatte angeordnet ist. Von Vorteil ist dabei, dass über ETHERCAT übertragene Information über Ethernet weiter übertragbar ist.

**Erfindungsgemäß** ist die Ethernet-Schnittstelle weniger weit entfernt vom Busmaster als der Sternverteiler vom Busmaster entfernt angeordnet
oder die Ethernet-Schnittstelle ist weniger weit entfernt vom Sternverteiler als der Busmaster vom Sternverteiler entfernt angeordnet. Von Vorteil ist dabei, dass keine Störungen bewirkt werden, obwohl die Ethernet-Schnittstelle sehr nahe anordenbar ist und somit Störstrahlung ausgesendet wird. Da aber Pegelumwandlung, galvanische Trennung differentielle Datenleitung sowie Spannungsauffrischung vorgesehen sind, ist der störende Einfluss beherrschbar.

Bei einer vorteilhaften Ausgestaltung ist der Busmaster als ein einziges Bauteil, insbesondere IC, also integrierter Schaltkreis, ausgeführt, insbesondere und auf der Leiterplatte bestückt ist. Von Vorteil ist dabei, dass eine integrierte Ausführung erreichbar ist und somit hohe Datenströme fehlerfrei oder zumindest fehlerarm übertragbar sind.

Bei einer vorteilhaften Ausgestaltung ist der Sternverteiler als ein einziges Bauteil, insbesondere IC, also integrierter Schaltkreis, ausgeführt, insbesondere und auf der Leiterplatte bestückt ist. Von Vorteil ist dabei, dass eine kompakte Ausführung ermöglicht ist, wobei eine Massenfertigung ermöglicht ist und daher geringe Kosten pro Bauteil notwendig sind.

Bei einer vorteilhaften Ausgestaltung ist der Busmaster mit einer Ethernet-Schnittstelle verbunden, die ebenfalls auf der Leiterplatte angeordnet und/oder bestückt ist. Von Vorteil ist dabei, dass eine einfache Herstellung in kompakter Weise ausführbar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:

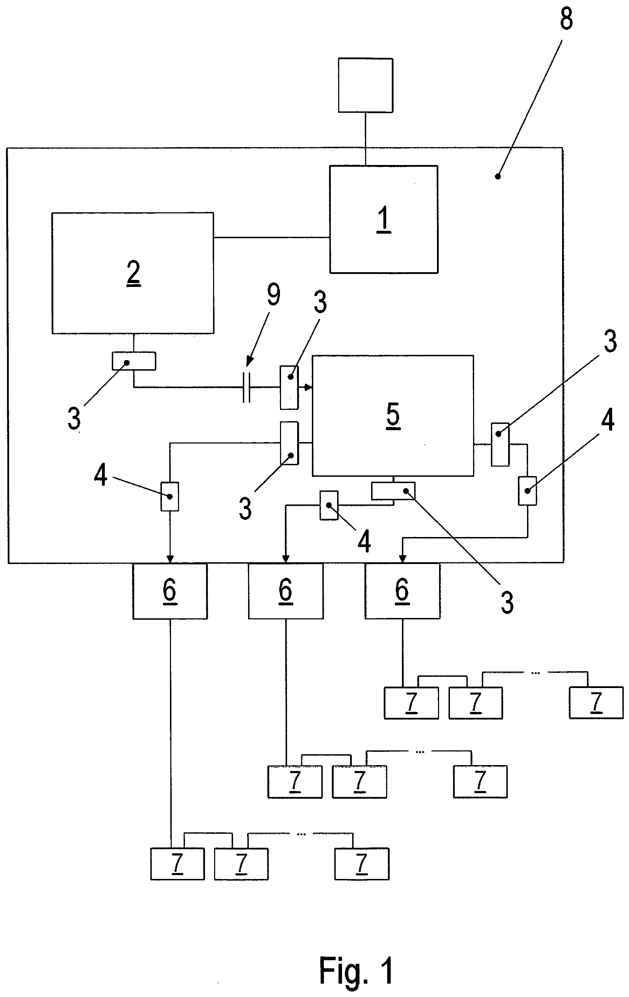

In der Figur 1 ist ein erfindungsgemäßes System schematisch dargestellt.

Dabei ist auf einer vorzugsweise einstückig, also einteilig, ausgeführten Leiterplatte 8 eine Steuerung 1 bestückt, welche eine Ethernet-Schnittstelle aufweist und darüber hinaus mit einem auf der Leiterplatte 8 bestückten Busmaster 2 zur Datenübertragung verbunden ist.

Zur Datenübertragung weist der Busmaster 2 einen Anschluss auf, der über einen Pegelwandler 3 und eine differentiell ausgeführte Datenleitung sowie eine kapazitive Entkopplung 9 mit einem weiteren Pegelwandler verbunden ist, der an einem Anschluss eines Sternverteilers 5 angeordnet ist.

Somit werden die Signale des Busmasters nach der Umwandlung der Spannungspegel durch den Pegelwandler 3 über den differentiell ausgeführten Datenleitungen zu einer Kondensatoranordnung hingeleitet, welche die galvanische Trennung vorsieht. Gleichspannungen sind somit vom am Anschluss des Busmasters 2 angeschlossenen Pegelwandler 3 nicht zum am Anschluss des Sternverteilers 5 angeschlossenen Pegelwandler 3 durchleitbar.

Der Spannungspegel der Wechselspannungsanteile, welche durch die Kondensatoranordnung durchgeleitet werden, wird vom Pegelwandler 3 umgewandelt und dem Sternverteiler 5 vorzugsweise als TTL-Pegel zugeführt. Auch der Busmaster ist mittels TTL-Pegelbetreibbar, so dass nur die differentielle Datenleitung einen anderen Pegel aufweist.

Der Busmaster ist ein ETHERCAT-Busmaster und der Sternverteiler ist ebenfalls ein ETHERCAT-Sternverteiler. Insbesondere werden die vom Busmaster 2 kommenden Signale den weiteren Anschlüssen des Sternverteilers 5 zugeführt, deren Signale einem jeweiligen Pegelwandler 3 zugeführt werden und wiederum als differentielle Signale über eine jeweilige galvanische Entkopplung 4 zu auf der Leiterplatte 8 bestückten Steckverbinderteilen 6 geführt werden.

Jeweils mehrere als ETHERCAT-Busteilnehmer ausgeführten Busteilnehmer 7 bilden einen seriell miteinander verbundenen jeweiligen Strang, welcher jeweils mit dem jeweiligen Steckverbinder 6 verbunden ist.

An dem Sternverteiler 5 sind also mehrere Stränge anschließbar. In Figur 1 sind hier drei Stränge verbunden.

Da der Sternverteiler 5 und der Busmaster 2 auf derselben Leiterplatte bestückt sind, ist nur ein einziges Gehäuse für den Sternverteiler 5 und den Busmaster 2 notwendig. Außerdem ist eine Entwärmung durch einen einzigen Kühlkörper ausführbar, welcher Verlustwärme des Sternverteilers 5 und Verlustwärme des Busmasters 2 an die Umgebung abführt.

Da die am Sternverteiler 5 eingehenden und ausgehenden Datenleitungen galvanisch entkoppelt sind, ist eine Spannungsauffrischung innerhalb des Sternverteilers 5 bei weiteren erfindungsgemäßen Ausführungsbeispielen ausführbar.

Obwohl Busmaster 2 und Sternverteiler 5 auf derselben Leiterplatte 8 angeordnet sind, werden die Pegelwandler 3 und galvanische Entkopplungen, insbesondere kapazitive Trennungen vorgesehen. Somit sind auf der Leiterplatte andere Signalelektronikkomponenten anordenbar, deren elektromagnetische Abstrahlung zwar störend wären; da aber die galvanischen Trennungen und Pegelwandlungen negative Wirkungen von Störstrahlung verringern, sind diese anderen Signalelektronikkomponenten sehr nahe anordenbar neben den ETHERCAT-Komponenten, insbesondere Busmaster 2 und Sternverteiler 5.

Eine solche andere Signalelektronikkomponente ist beispielsweise auch die Ethernet-Schnittstelle. Somit ist auch diese Schnittstelle sehr nahe am Busmaster 2 oder am Sternverteiler 5 anordenbar. Insbesondere ist die Ethernet-Schnittstelle weniger weit entfernt vom Busmaster als der Sternverteiler vom Busmaster entfernt angeordnet oder die Ethernet-Schnittstelle ist weniger weit entfernt vom Sternverteiler als der Busmaster vom Sternverteiler entfernt angeordnet.

Vorzugsweise ist der Busmaster 2 als ETHERCAT-Busmaster 2 ausgeführt und die Busteilnehmer 7 als ETHERCAT-Busteilnehmer 7. Außerdem ist der Sternverteiler 5 als Verteiler für ETHERCAT ausgeführt.

### Bezugszeichenliste

1 Steuerung
2 Busmaster
3 Pegelwandler
4 galvanische Entkopplung
5 Sternverteiler
6 Anschluss, insbesondere Steckverbinder
7 Busteilnehmer
8 Leiterplatte
9 kapazitive Trennung

## Patentansprüche

1. ETHERCAT-Bussystem, aufweisend einen ETHERCAT-Busmaster (2) und ETHERCAT-Busteilnehmer (7),
**dadurch gekennzeichnet, dass**
ein ETHERCAT-Sternverteiler (5) zusammen mit dem ETHERCAT-Busmaster (2) auf derselben Leiterplatte (8) angeordnet und/oder bestückt sind,
**wobei die Leiterplatte (8) von einem Gehäuse umgeben ist,**
**wobei ein Kühlkörper die Verlustwärme des Busmasters (2) und des Sternverteilers (5) an die Umgebung abführt,**
**wobei das Gehäuse als einziges Gehäuse für den Sternverteiler (5) und den Busmaster (2) fungiert,**
**wobei ein einziger Kühlkörper die Verlustwärme des Sternverteilers (5) und Verlustwärme des Busmasters (2) an die Umgebung abführt**
**wobei der Busmaster (2) mit einer Störstrahlung aussendenden Ethernet-Schnittstelle verbunden ist, die ebenfalls auf der Leiterplatte (8) angeordnet ist,**
**wobei die Ethernet-Schnittstelle weniger weit entfernt vom Busmaster als der Sternverteiler vom Busmaster entfernt angeordnet ist**
**oder die Ethernet-Schnittstelle weniger weit entfernt ist vom Sternverteiler als der Busmaster vom Sternverteiler entfernt angeordnet ist,**
**wobei eine Pegelumwandlung, eine galvanische Trennung, eine differentielle Datenleitung sowie eine Spannungsauffrischung ausgeführt sind.**

2. Bussystem nach Anspruch 1,
**dadurch gekennzeichnet, dass**
am Anschluss (6), insbesondere Ausgang, des Busmasters (2), ein Pegelwandler (3) angeordnet ist, von dem Datenleitungen über zumindest eine kapazitive Trennung (9), insbesondere Kondensatoranordnung, zu einem weiteren Pegelwandler (3) führen, welcher am Anschluss (6) des Sternverteilers (5) angeordnet und/oder angeschlossen ist.

3. Bussystem nach einem der vorangegangenen Ansprüche,
**dadurch gekennzeichnet, dass**
der Sternverteiler (5) Ausgänge aufweist, wobei an jedem Ausgang ein jeweiliger weiterer Pegelwandler (3) angeordnet und/oder angeschlossen ist, der jeweils über eine galvanische Trennung (9) mit einem jeweiligen Steckverbinderteil verbunden ist, dass auf der Leiterplatte (8) bestückt ist,
wobei am jeweiligen Steckverbinderteil jeweils ein Strang von mittels des ETHERCAT-Datenbusses in Reihe verbundenen Busteilnehmern (7) anschließbar, insbesondere angeschlossen, ist.

4. Bussystem nach einem der vorangegangenen Ansprüche,
**dadurch gekennzeichnet, dass**
der Busmaster (2) als ein einziges Bauteil, insbesondere IC, also integrierter Schaltkreis, ausgeführt ist, insbesondere und auf der Leiterplatte (8) bestückt ist.

5. Bussystem nach einem der vorangegangenen Ansprüche,
**dadurch gekennzeichnet, dass**
der Sternverteiler (5) als ein einziges Bauteil, insbesondere IC, also integrierter Schaltkreis, ausgeführt ist, insbesondere und auf der Leiterplatte (8) bestückt ist.

## Claims

1. EtherCAT bus system comprising an EtherCAT bus master (2) and EtherCAT bus subscribers (7),
**characterised in that**
an EtherCAT star hub (5) is arranged and/or mounted on the same printed circuit board (8) together with the EtherCAT bus master (2),
the printed circuit board (8) being surrounded by a housing,
the cooling member dissipating the thermal losses of the bus master (2) and the star hub (5) to the surroundings,
the housing acting as a single housing for the star hub (5) and the bus master (2),
a single cooling member dissipating the thermal losses of the star hub (5) and the thermal losses of the bus master (2) to the surroundings,
the bus master (2) being connected to an Ethernet interface, which emits interfering radiation and is likewise arranged on the printed circuit board (8),
the Ethernet interface being less distant from the bus master than the star hub is distant from the bus master,
or the Ethernet interface being less distant from the star hub than the bus master is distant from the star hub,
level conversion, galvanic isolation, differential data routing and voltage refresh being implemented.

2. Bus system according to claim 1,
**characterised in that**
at the terminal (6), in particular the output, of the bus master (2) there is arranged a level converter (3), from which data lines lead to a further level converter (3) via at least one capacitive isolation (9), in particular a capacitor arrangement, said further level converter being arranged at and/or connected to the terminal (6) of the star hub (5).

3. Bus system according to any of the preceding claims,
**characterised in that**
the star hub (5) comprises outputs, a respective further level converter (3) being arranged at and/or connected to each output, said further level converters each being connected, via a galvanic isolation (9), to a respective plug connector part mounted on the printed circuit board (8),
a chain of bus subscribers (7) that are connected in series by means of the EtherCAT data bus being connectable, in particular connected, to each plug connector part.

4. Bus system according to any of the preceding claims,
**characterised in that**
the bus master (2) is configured as a single component, in particular an IC, i.e. an integrated circuit, and in particular is mounted on the printed circuit board (8).

5. Bus system according to any of the preceding claims,
**characterised in that**
the star hub (5) is configured as a single component, in particular an IC, i.e. an integrated circuit, and in particular is mounted on the printed circuit board (8).

## Revendications

1. Système de bus ETHERCAT, comprenant un maître de bus ETHERCAT (2) et des abonnés de bus ETHERCAT (7),
**caractérisé en ce que**
un répartiteur en étoile ETHERCAT (5) ainsi que le maître de bus ETHERCAT (2) sont agencés et/ou installés sur la même carte de circuit imprimé (8),
la carte de circuit imprimé (8) étant entourée d'un boîtier,
un dissipateur thermique évacuant les pertes thermiques du maître de bus (2) et du répartiteur en étoile (5) vers l'environnement,
le boîtier faisant office de boîtier unique pour le répartiteur en étoile (5) et le maître de bus (2),
un dissipateur thermique unique évacuant les pertes thermiques du répartiteur en étoile (5) et les pertes thermiques du maître de bus (2) vers l'environnement le maître de bus (2) étant relié à une interface Ethernet également agencée sur la carte de circuit imprimé (8) et émettant un rayonnement parasite,
l'interface Ethernet étant agencée moins loin du maître de bus que le répartiteur en étoile ne l'est du maître de bus
ou l'interface Ethernet étant agencée moins loin du répartiteur en étoile que le maître de bus ne l'est du répartiteur en étoile,
une conversion de niveau, une séparation galvanique, un acheminement de données différentiel et un rafraîchissement de la tension étant mis en œuvre.

2. Système de bus selon la revendication 1,
**caractérisé en ce que**
sur le raccordement (6), en particulier la sortie, du maître de bus (2), est agencé un convertisseur de niveau (3) à partir duquel des lignes de données conduisent, en passant par au moins une séparation capacitive (9), en particulier un agencement de condensateurs, à un autre convertisseur de niveau (3) qui est agencé et/ou raccordé au raccordement (6) du répartiteur en étoile (5).

3. Système de bus selon l'une quelconque des revendications précédentes, **caractérisé en ce que**
le répartiteur en étoile (5) présente des sorties, un autre convertisseur de niveau (3) respectif étant agencé et/ou raccordé à chaque sortie et étant relié par respectivement une séparation galvanique (9) à une partie connecteur enfichable respective installée sur la carte de circuit imprimé (8),
respectivement un écheveau d'abonnés de bus (7) connectés en série au moyen du bus de données ETHERCAT pouvant être raccordé, en particulier étant raccordé, à la partie connecteur enfichable respective.

4. Système de bus selon l'une quelconque des revendications précédentes, **caractérisé en ce que**
le maître de bus (2) est en particulier mis en œuvre sous la forme d'un composant unique, en particulier d'un circuit intégré, c'est-à-dire d'une puce, et est installé sur la carte de circuit imprimé (8).

5. Système de bus selon l'une quelconque des revendications précédentes, **caractérisé en ce que**
le répartiteur en étoile (5) est en particulier mis en œuvre sous la forme d'un composant unique, en particulier d'un circuit intégré, c'est-à-dire d'une puce, et est installé sur la carte de circuit imprimé (8).
